# EUROPEAN PATENT APPLICATION

(11) **EP 2 511 700 A1**
(43) Date of publication of application: **17.10.2012**
(21) Application number: 12163132.9
(22) Date of filing: 04.04.2012
(51) Int. Cl.: G01N 27/84

(54) **Non-contact magnetic particle inspection apparatus**

(30) Priority: 11.04.2011 US 201113083907
(71) Applicant: General Electric Company, Schenectady, NY 12345 (US)
(72) Inventor: Bergman, Robert William, Schenectady, NY 12345 (US)
(74) Representative: Cleary, Fidelma

(57) **Abstract**

A non-contact magnetic particle inspection apparatus (2) includes a test article support and manipulation system (34) having a first rail (38) that extends along a first axis, a second rail (39) that extends along the first axis, and a third rail (70) that extends a second axis. The third rail (70) includes a first end (41, 47, 72) that extends to a second end (42, 48, 73) through an intermediate portion (43, 49, 74). The first end (41, 47, 72) is mounted to the first rail (38) and the second end (42, 48, 73) is mounted to the second rail (39). A mounting fixture (90) is mounted to the third rail (70). The mounting fixture (90) includes a test article mounting system (93) and a test article orientation system (95). The test article orientation system (95) is configured and disposed to selectively manipulate a test article (114) within a magnetic field (25).

## Description

### BACKGROUND OF THE INVENTION

The subject matter disclosed herein relates to the art of non-destructive testing systems and, more particularly, to a non-contact magnetic particle inspection apparatus.

Conventional manufacturing facilities require various forms of testing to ensure quality of a final product(s). Many manufacturing facilities utilize periodic sampling to ensure final quality. However certain industries require that each part leaving a production facility undergo one or more quality assurance tests. Periodic sampling methods often employ destructive testing techniques to ensure quality. That is, one or more products are selected at random from a production line and subjected to various tests. The tests ultimately result in the destruction of the product(s) but provide data that is used to control an overall product quality. Industries that require that each final product be tested cannot utilize destructive testing techniques. Such industries employ a wide range of non-destructive testing techniques that ensure that each product leaving the facility meets a certain quality standard.

One industry that requires all products be tested is turbomachine manufacturing. Many turbomachine components are subjected to high forces and high temperatures that produce a harsh operating environment. Subjecting a defective part to such a harsh environment could lead to component failure. Failure of a turbomachine component leads to costly down time and expensive repair/replacement. Accordingly, components such as turbomachine buckets are subjected to a number of final tests before leaving production. For example, each turbomachine airfoil made of a ferromagnetic material is subjected to a magnetic particle inspection. In a magnetic particle inspection test, an airfoil is placed in a container and a magnetic field is applied. While the magnetic field is being applied the airfoil is continuously coated with ferrous iron particles. The particles can either be in a dry state or in a wet suspension. The particles are attracted to areas of flux leakage thereby providing a visual indication of a defect. In order to form this visual indication the defect must break lines of flux to form a leakage field. As such, this inspection method is orientation dependent. The test is carried out in multiple steps between which the bucket is manipulated into different orientations. Current testing systems require that the bucket be manually repositioned into each new orientation required for each step of the test and sometimes the induction of current directly into the finish machined part.

### BRIEF DESCRIPTION OF THE INVENTION

According to one aspect, the invention resides in a non-contact magnetic particle inspection apparatus includes a test article support and manipulation system having a first rail that extends along a first axis, a second rail that extends along the first axis, and a third rail that extends along second axis. The third rail includes a first end that extends to a second end through an intermediate portion. The first end is mounted to the first rail and the second end is mounted to the second rail. A mounting fixture is mounted to the third rail. The mounting fixture includes a test article mounting system and a test article orientation system. The test article orientation system is configured and disposed to selectively manipulate a test article within a magnetic field.

The non-contact magnetic particle inspection apparatus may further include a test bed having a testing zone, and a magnetic field generator positioned in the testing zone. The test article support and manipulation system is supported in the testing zone and includes a first rail that extends along the first axis alongside a first side of the magnetic field generator, the second rail that extends along the first axis alongside a second side of the magnetic field generator, and a third rail that extends through the magnetic field generator along a second axis.

According to another aspect, the invention resides in a method of manipulating a test article in a magnetic particle test apparatus includes mounting a test article on a mounting fixture arranged on a test article support and manipulation system, activating a test article orientation system coupled to the mounting fixture to establish a desired orientation of the test article relative to a magnetic field generator, and shifting the mounting fixture along the test article support and manipulation system to position the test article in the magnetic field generator.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a perspective view of a non-contact magnetic particle inspection apparatus in accordance with an exemplary embodiment shown positioning a test article in a first orientation;
FIG. 2 is a perspective view of the non-contact magnetic particle inspection apparatus in accordance with the exemplary embodiment shown positioning the test article in a second orientation;
FIG. 3 is a perspective view of the non-contact magnetic particle inspection apparatus in accordance with the exemplary embodiment shown positioning the test article in a third orientation; and
FIG. 4 is a perspective view of the non-contact magnetic particle inspection apparatus in accordance with the exemplary embodiment shown positioning the test article in a fourth orientation.

The detailed description explains embodiments of the invention, together with advantages and features, by way of example with reference to the drawings.

### DETAILED DESCRIPTION OF THE INVENTION

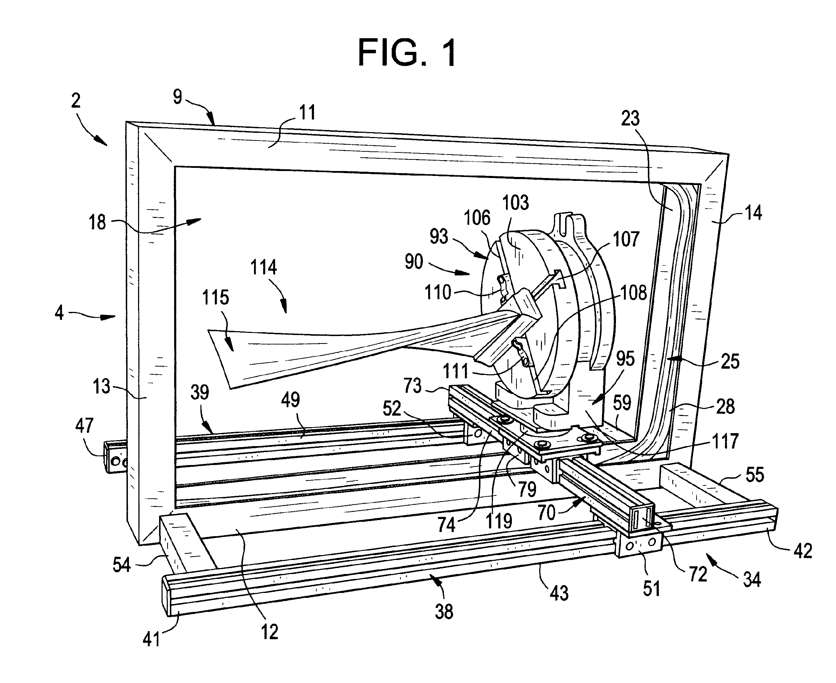

With reference to FIG. 1, a non-contact magnetic particle inspection apparatus in accordance with an exemplary embodiment is indicated generally at 2. Particle inspection apparatus 2 includes a test bed 4 having a frame 9 formed from first and second opposing frame members 11 and 12 that are joined to third and fourth opposing frame members 13 and 14 to collectively define a testing zone 18. Frame 9 includes an inner channel 23 within which is arranged a magnetic field generator 25. Magnetic field generator 25 includes a plurality of conductors indicated at 28 that extend about testing zone 18.

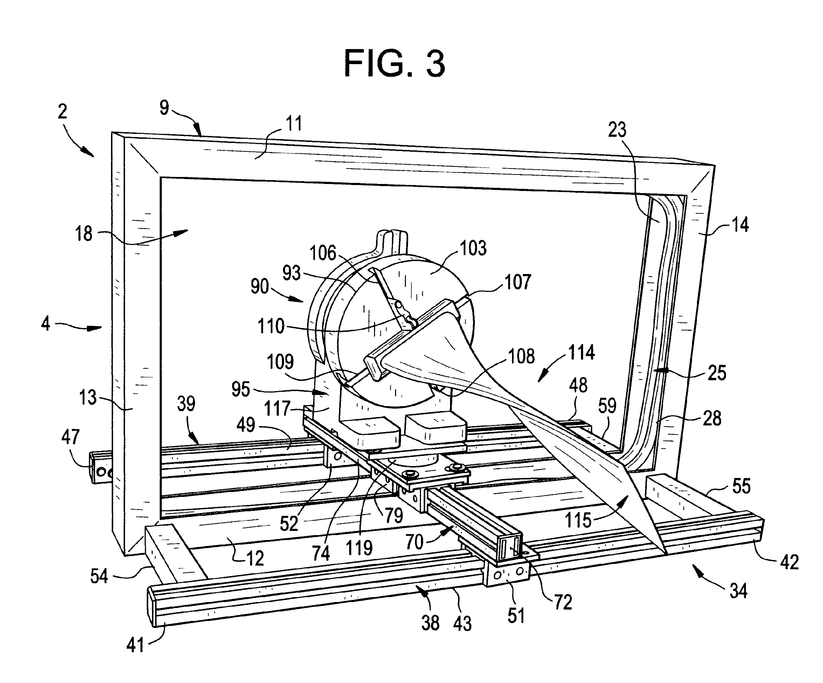

In further accordance with the exemplary embodiment, magnetic particle inspection apparatus 2 includes a test article support and manipulation system 34 which, as will be discussed more fully below, retains and positions a test article within testing zone 18. Test article support and manipulation system 34 includes first and second rails 38 and 39 that extend along a first axis that is substantially parallel to a magnetic field formed in testing zone 18. First rail 38 includes a first end 41 that extends to a second end 42 through an intermediate portion 43. Similarly, second rail 39 includes a first end 47 that extends to a second end 48 (FIG. 3) through an intermediate portion 49. First rail 38 includes a first carriage 51 that is selectively positionable along the first axis between first and second ends 41 and 42 along intermediate portion 43. Likewise, second rail 39 includes a second carriage 52 that is selectively positionable along the first axis between first and second ends 47 and 48 along intermediate portion 49. First and second mounting members 54 and 55 secure first rail 38 to a first side (not separately labeled) of frame 9, while a third mounting member (not shown) and a fourth mounting member 59 secure second rail 38 to a second, opposing side (not separately labeled) of frame 9.

Test article support and manipulation system 34 is further shown to include a third rail 70 that extends along a second axis that is substantially orthogonal to the magnetic field produced in testing zone 18. Third rail 70 includes a first end 72 that extends to a second end 73 through an intermediate portion 74 which passes through testing zone 18. First end 72 is mounted to first carriage 51 and second end 73 is mounted to second carriage 52. With this agreement, third rail 70 is selectively positionable along the first axis relative to first and second rails 38 and 39. Third rail 70 is also shown to include a third carriage 79 that is selectively positionable along the second axis between first and second ends 72 and 73 along intermediate portion 74. As will be discussed more fully below, third carriage 79 supports a mounting fixture 90. Mounting fixture 90 includes a test article mounting system 93 and a test article orientation system 95. Test article mounting system 93 includes a support surface 103 having a plurality of slots 106-109. A first mounting element 110 is positioned in slot 106 and a second mounting element 111 is positioned in slot 108. First and second mounting elements 110 and 111 are selectively positioned upon support surface 103 along slots 106 and 108 to retain a test article 114. In the exemplary embodiment shown, test article 114 takes the form of a turbomachine bucket 115.

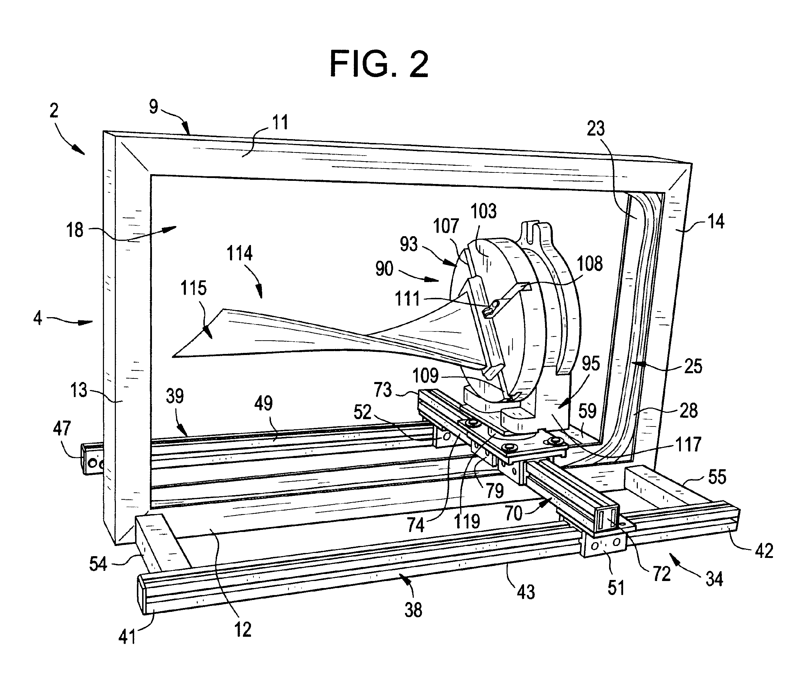

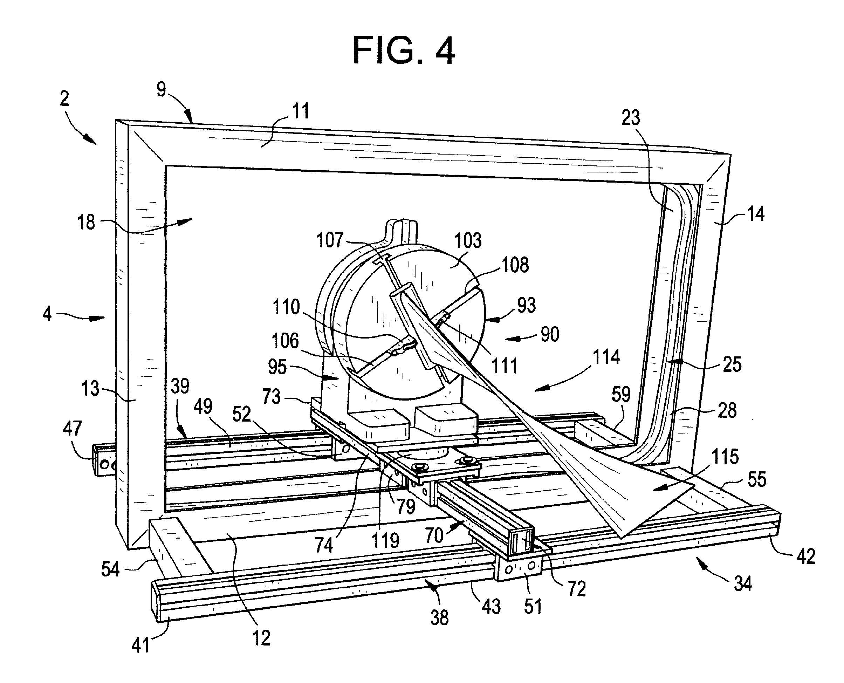

In further accordance with the exemplary embodiment, test article orientation system 95 includes a first positioning member 117 and a second positioning member 119. First positioning member 117 is configured to rotate test article 114 about the first or second axis. While second positioning member 119 is configured to rotate test article mounting system 93 about a third axis that is substantially perpendicular to the first and second axes. With this arrangement, test article 14 can be arranged in testing zone 18 in a first configuration, such as shown in FIG. 1 with bucket 115 extending substantially parallel to the magnetic field in testing zone 18, rotated about the first axis such as shown in FIG. 2, rotated about the third axis such that bucket 115 extends substantially orthogonal to the magnetic field in testing zone 18, and shifted along the second axis such as shown in FIG. 3, and/or rotated about the second axis such a shown in FIG. 4. In this manner, the test article may be bathed in magnetic particles and manipulated within a magnetic field generated by magnetic field generator 25. The magnetic particles are attracted to areas of flux leakage providing a visual indication of a defect that may be present in the test article. The use of the test article support and manipulation system in combination with the test article mounting system and test article orientation system allows for an uninterrupted hands free testing of a test article. That is, once a test article is mounted to test article mounting system, testing can be conducted in many different orientations without the need to stop testing to reposition the test article.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A non-contact magnetic particle inspection apparatus (2) comprising:
a test article support and manipulation system (34) including a first rail (38) that extends along a first axis, a second rail (39) that extends along the first axis, and a third rail (70) that extends along a second axis, the third rail (70) having a first end (41, 47, 72) (that extends to a second end (42, 48, 73) through an intermediate portion (43, 49, 74), the first end (41, 47, 72) being mounted to the first rail (38) and the second end (42, 48, 73) being mounted to the second rail (39); and
a mounting fixture (90) mounted to the third rail (70), the mounting fixture (90) including a test article mounting system (93) and a test article orientation system (95), the test article orientation system (95) being configured and disposed to selectively manipulate a test article (114) within a magnetic field (25).

2. The non-contact magnetic particle inspection apparatus (2) according to claim 1, wherein the test article orientation system (95) is configured and disposed to rotate a test article (114) about one of the first and second axes.

3. The non-contact magnetic particle inspection apparatus (2) according to claim 1, wherein the test article orientation system (95) is configured and disposed to rotate the test article (114) about a third axis, the third axis being orthogonal to the first axis and the second axis.

4. The non-contact magnetic particle inspection apparatus (2) according to claim 1 or 2, wherein the test article orientation system (95) is configured and disposed to rotate a test article (114) about each of the first and second axes, and about a third axis, the third axis being orthogonal to the first axis and the second axis.

5. The non-contact magnetic particle inspection apparatus (2) according to any of claims 1 to 4, wherein the third rail (70) is configured and disposed to translate along the first axis.

6. The non-contact magnetic particle inspection apparatus (2) according to any preceding claim, wherein the mounting fixture (90) is configured and disposed to translate along the second axis.

7. The non-contact magnetic particle inspection apparatus (2) of any preceding claims, further comprising:
a test bed (4) including a testing zone (18); and
a magnetic field generator (25) positioned in the testing zone (18);
wherein the test article support and manipulation system (34) is supported in the testing zone (18), and wherein the first rail (38) extends along a first axis alongside the first side of the magnetic field generator (25), the second rail (39) extends along the first axis alongside the second side of the magnetic field generator (25), and the third rail (70) extends through the opening of the magnetic field generator (25) along a second axis.

8. The non-contact magnetic particle inspection apparatus (2) according to claim 7, wherein the third rail (70) is configured and disposed to translate along the first and second rails (38,39).

9. The non-contact magnetic particle inspection apparatus (2) according to claim 7, wherein the mounting fixture (90) is configured and disposed to translate along the third rail (70).

10. A method of manipulating a test article (114) in a magnetic particle test apparatus (2), the method comprising:
mounting a test article (114) on a mounting fixture (90) arranged on a test article support and manipulation system (34);
activating a test article orientation system coupled to the mounting fixture (90) to establish a desired orientation of the test article (114) relative to a magnetic field generator (25); and
shifting the mounting fixture (90) along the test article support and manipulation system (34) to position the test article (114) relative to a magnetic field produced by the magnetic field generator (25).

11. The method of claim 10, wherein establishing a desired orientation of the test article (114) comprises rotating the test article (114) about an axis that is substantially orthogonal to a magnetic field produced by the magnetic field generator.

12. The method of claim 10, wherein establishing a desired orientation of the test article (114) comprises rotating the test article (114) about an axis that is substantially parallel to a magnetic field (25) produced by the magnetic field generator (25).

13. The method of claim 10 or 11, wherein establishing a desired orientation of the test article comprises rotating the test article (114) about a first axis that is substantially orthogonal to a magnetic field generated by the magnetic field generator (25) and a second axis that is substantially parallel to the magnetic field produced by the magnetic field generator (25).

14. The method of any of claims 10 to 13, wherein shifting the mounting fixture (90) along the test article support and manipulation system (34) comprises translating the mounting fixture (90) along an axis that is substantially parallel to a magnetic field generated by the magnetic field generator (25).

15. The method of any of claims 10 to 13, shifting the mounting fixture along the test article support and manipulation system (34) comprises translating the mounting fixture (90) along an axis that extends through the magnetic field generator (25).

16. The method of any of claims 10 to 15, further comprising: generating a magnetic field in the magnetic field generator and directing magnetic particles onto the article to be tested.
